# FASCICULE DE BREVET EUROPEEN

(11) **EP 1 327 171 B1**
(45) Date de publication et mention de la délivrance du brevet: **19.04.2006**
(21) Numéro de dépôt: 01976409.1
(22) Date de dépôt: 12.10.2001
(51) Int. Cl.: G02B 6/14, G02B 6/26

(54) **COLLIMATEUR OPTIQUE POUR FIBRES MONOMODES ET FIBRE MONOMODE A COLLIMATEUR INTEGRE**
OPTISCHER KOLLIMATOR FÜR MONOMODE-FASERN UND MONOMODE-FASER MIT INTEGRIERTEM KOLLIMATOR
OPTICAL COLLIMATOR FOR MONOMODE FIBRES AND MONOMODE FIBRE WITH INTEGRATED COLLIMATOR

(30) Priorité: 16.10.2000 FR 0013245
(43) Date de publication de la demande: 16.07.2003
(73) Titulaire: FRANCE TELECOM, 75015 Paris (FR)
(72) Inventeur: CHANCLOU, Philippe, F-22300 Lannion (FR); GRAVEY, Philippe, F-22300 Lannion (FR); THUAL, Monique, F-22560 Trebeurden (FR)
(74) Mandataire: Stephann, Valérie Annabelle
(86) Numéro de dépôt international: PCT/FR2001/003156
(87) Numéro de publication internationale: WO 2002/033463

(56) Documents cités:
- GB-A- 2 169 096
- US-A- 4 737 004
- US-A- 4 893 892
- US-A- 5 729 643
- US-A- 5 940 554
- PATENT ABSTRACTS OF JAPAN vol. 009, no. 033 (P-334), 13 février 1985 (1985-02-13) & JP 59 177503 A (FUJITSU KK), 8 octobre 1984 (1984-10-08)

## Description

L'invention concerne un collimateur optique pour fibres monomodes. Elle concerne également une fibre optique monomode à collimateur intégré et un procédé de fabrication.

Les collimateurs optiques pour fibres monomodes sont utilisés pour élargir la taille du faisceau et ainsi relâcher les contraintes de positionnement et l'influence des poussières sur le couplage d'une fibre optique avec un module optique placé en extrémité de fibre (le module optique peut être une autre fibre, un composant actif, un connecteur).

On rappelle que, dans le domaine des télécommunications, la fibre monomode est le support privilégié pour la transmission à haut débit pour les grandes distances. Cependant l'utilisation de cette fibre pour ses propriétés de propagation entraîne d'importantes difficultés d'assemblage chaque fois qu'une interconnexion de deux fibres est nécessaire. En effet la surface d'émission des fibres monomodes est de petite taille de l'ordre de 10µm de diamètre. On comprend donc que la taille de cette surface d'émission rend le couplage optique très sensible aux positionnements axiaux et transversaux, à la moindre poussière ou défaut d'extrémité.

Il est par conséquent usuel de placer ou de réaliser un collimateur optique en extrémité de fibres monomodes pour s'affranchir de ces contraintes.

Plusieurs solutions technologiques sont proposées à ce jour pour réaliser de tels collimateurs.

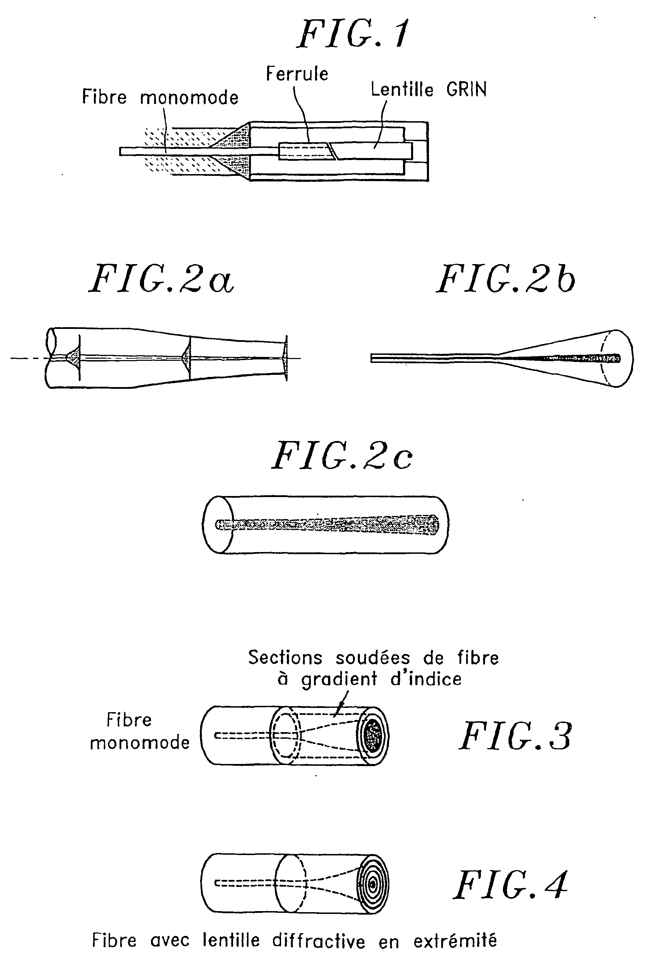

Une première solution représentée sur la figure 1 consiste à positionner (coller, souder...) en extrémité de la fibre monomode un barreau à gradient d'indice de diamètre supérieur à celui de la fibre monomode. A titre d'exemple le diamètre du barreau est d'environ 2mm alors que celui de la fibre est de 125µm.

Ce collimateur permet d'obtenir un faisceau en sortie d'environ 500µm avec une divergence de 0.25°.

Ce type de collimateur permet un assemblage sur des montages de type connecteur et convient parfaitement dans le cas d'interfaces fibres/espace libre.

Les qualités de ce type de collimateur sont des pertes minimes, une divergence faible et une faible réfraction du signal grâce à des montages en biais et des traitements anti-reflets.

Malheureusement, l'inconvénient de cette solution est son faible niveau d'intégration de la fonction optique par rapport à la taille de la fibre et son prix.

En effet, le diamètre de 2 mm du barreau à gradient d'indice est 16 fois supérieur au diamètre de la fibre de 125 µm. La compacité des modules optoélectroniques en est donc limitée. De plus, ce type de technologie nécessite un bon alignement mécanique de la fibre avec le barreau à gradient d'indice, ce qui conduit à un produit connectorisé cher.

Une autre technologie consiste en un collimateur à base de fibres à mode élargi comme représenté sur les figures 2a, 2b, 2c.

L'élargissement du faisceau lumineux par la modification du coeur de la fibre, permet d'intégrer une fonction de collimation dans la fibre. L'intégration de la fonction optique est alors complète au niveau de la fibre. Les méthodes pouvant être utilisées pour réaliser des fibres à modes élargis sont :
- la fusion et l'étirage pour déconfiner le mode de la fibre en diminuant la section du guide (proposé en 1978 par K. Furuya et al.).
- l'augmentation graduelle de la section guidante avec le diamètre extérieur (proposé en 1987 par N. Amitay et al.).
- la diffusion d'atomes de dopage du coeur de la fibre monomode par un traitement thermique (proposé en 1986 par K. Shigihara et al.). Cette fibre correspond à la fibre TEC (Thermaly diffused Expansed Core).

Cependant cette solution présente des inconvénients :
- Pour l'obtention d'un guide fin, le procédé de fusion et étirage est très sensible aux perturbations mécaniques et aux modifications d'indice de la fibre monomode. De plus, le diamètre extérieur n'est pas conservé à 125 µm ce qui nécessite un connecteur spécifique pour son maintien.
- L'élargissement simultané du diamètre extérieur et du coeur nécessite des préformes spéciales. Ce qui est peu compatible avec une production de masse à faible coût. En outre, des connecteurs spécifiques sont nécessaires. Le niveau d'intégration est faible.
- L'expansion du mode par diffusion d'atomes de dopage a pour inconvénient d'être sensible à la zone de clivage.

Une autre technologie consiste en un collimateur à base de fibres lentillées telles que l'illustre la figure 3. La particularité de la micro-lentille réside dans un apport de matière (par soudure) à l'extrémité de la fibre monomode pour contrôler l'expansion du faisceau. La première solution consiste à souder en extrémité de la fibre monomode un tronçon de fibre multimode à gradient d'indice. Une longueur appropriée de cette fibre est utilisée pour obtenir une section qui tient le rôle de lentille de collimation du faisceau lumineux. Par l'utilisation de fibres de différentes natures, une gamme plus importante de diamètres de mode et de distances de travail peuvent être obtenus. Les qualités de ces micro-lentilles (figure 3) sont nombreuses :
- Une bonne intégration avec des longueurs assez courtes de l'ordre de 500 µm, et des diamètres extérieurs de 125 µm équivalents à celui de la fibre monomode,
- Des coûts réduits car la quantité et le prix de la matière première utilisée sont faibles,
- Des faisceaux suffisamment élargis pour obtenir un bon compromis entre les tolérances de positionnement angulaire et de translation, et les distances de travail, de l'ordre de millimètre, suffisantes pour des applications d'interconnexions,
- Une reproductibilité et une qualité de fabrication connues puisque les étapes consistent en des étapes élémentaires de soudures et de clivages.

Un atout supplémentaire est la possibilité de fabrication collective (en ruban de fibres) avec des cliveuses et soudeuses appropriées.

Cependant, cette solution présente également des inconvénients :

En effet, les propriétés optiques sont obtenues par des longueurs définies de fibre à gradient d'indice ou autre. L'extrémité de la fibre n'est pas facilement utilisable pour du polissage ou du clivage en biais qui sont des étapes élémentaires de la mise en connecteur d'une fibre. Le risque est alors de modifier ou même de supprimer le lentillage d'extrémité.

Cette fibre ne peut donc par profiter de toute la technologie de manipulation et de connectorisation de la fibre standard.

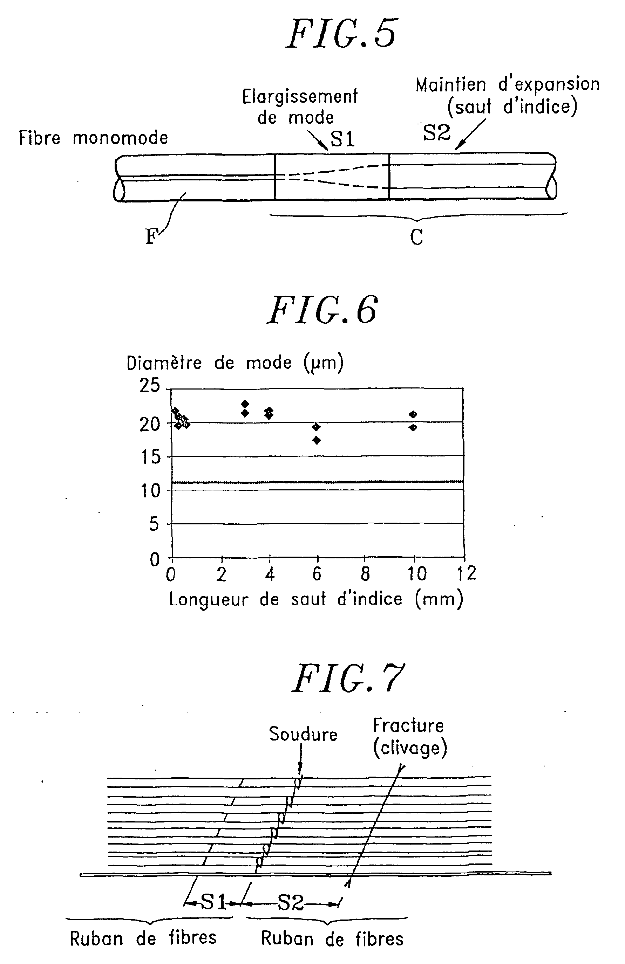

Et enfin, une quatrième technologie consiste en un collimateur à base de lentille diffractive telle que représentée sur la figure 4.

Cette technologie mise au point par Digital Optics Corporation consiste à réaliser par photo-inscription une lentille diffractive en extrémité d'un barreau de silice lui-même soudé à une fibre optique. Le motif de la lentille permet de réaliser une collimation du faisceau lumineux.

Malheureusement cette solution présente les inconvénients suivants :

L'alignement du masque de photo-inscription et des extrémités de fibres est compliqué pour une réalisation collective. La fabrication de matrice de fibres est possible mais nécessite des alignements coûteux.

Bien entendu cette fibre avec une lentille diffractive ne peut être polie, clivée sans destruction de la lentille. La mise en connecteur est pratiquement impossible.

US 4 737004 decrit une fibre optique comportant une section d'expansion associée à une section d'extrémité cylindrique, de fabrication monobloc.

L'invention a pour but de résoudre les problèmes mentionnés ci-dessus. L'invention a pour objet un collimateur qui s'intègre parfaitement dans la fabrication de fibres optiques monomode. Le résultat est une fibre optique avec un diamètre de mode large qui est complètement intégré à la dimension de la fibre et qui est facilement manipulable au sens de l'assemblage.

L'invention a pour objet, un collimateur optique avec les caractéristiques de la revendication 1.

Selon l'invention, le tronçon de fibre à expansion de mode est constitué par une pluralité de fibres de nature différente.

L'invention concerne aussi une fibre optique monomode à champ élargi, principalement caractérisée en ce qu'elle comporte en extrémité une section apte à maintenir constant le diamètre du faisceau de lumière, transmis par la fibre.

La section apte à maintenir constant le diamètre du faisceau de lumière, peut être constituée par un tronçon de fibre à saut d'indice.

La section apte à maintenir constant le diamètre du faisceau de lumière, peut être constituée par un tronçon de fibre à large coeur.

La fibre comprend une section à élargissement de mode.

La fibre et les tronçons de fibres en son extrémité ont le même diamètre.

Un procédé de fabrication d'un ensemble de fibres optiques à expansion de mode principalement comprend les étapes suivantes :
- souder collectivement un ensemble de n fibres à maintien d'expansion de mode à un ensemble de n fibres monomodes à expansion de mode,
- fracturer collectivement l'ensemble de n fibres à maintien d'expansion de manière à obtenir n tronçons de longueur prédéterminée.

Les ensembles de n fibres se présentent sous la forme de rubans de fibres.

Les fibres à maintien d'expansion utilisées dans le procédé de fabrication sont des fibres multimodes à saut d'indice.

Selon un autre mode de réalisation, les fibres à maintien d'expansion sont des fibres monomodes à large coeur.

D'autres particularités et avantages de l'invention apparaîtront clairement à la lecture de la description qui est faite ci-après et qui est donnée à titre illustratif et non limitatif en regard des dessins annexés sur lesquels :
- Les figures 1, 2a, 2b, 2c, 3 et 4 représentent des schémas de collimateurs selon l'état de la technique,
- La figure 5, représente un schéma d'une fibre optique avec collimateur intégré selon l'invention,
- La figure 6 représente un tableau d'évolution du diamètre de mode en fonction de la longueur de fibre multimode à saut d'indice.
- La figure 7 représente la fabrication collective de fibres monomodes selon l'invention.

Selon l'invention le collimateur C illustré par le schéma de la figure 5, comprend une optique S1 à élargissement de mode. Cette optique d'expansion de mode S1 est réalisée par des tronçons de fibres de différentes natures, juxtaposés par soudure.

Le collimateur C selon l'invention comprend en outre une optique S2 à maintien d'expansion (maintien du mode élargi), c'est à dire une optique apte à propager un faisceau de lumière de diamètre constant. Cette optique d'expansion S2 est réalisée par un tronçon de fibre ayant les propriétés requises. Il pourra s'agir d'un tronçon de fibre à saut d'indice ou d'un tronçon de fibre monomode à large coeur c'est à dire ayant un diamètre de coeur supérieur au diamètre du tronçon de fibre à expansion.

On constate qu'un tel collimateur s'intègre parfaitement bien dans la réalisation d'une fibre monomode comme l'illustre la figure 5.

En effet, la fibre monomode F comporte en son extrémité un collimateur C qui ne change en rien l'aspect extérieur de la fibre F puisque son diamètre extérieur est le même que celui de la fibre, et qui ne change en rien sa résistance mécanique.

En outre ce collimateur C permet l'assemblage sur des montages de type connecteurs et convient parfaitement dans le cas d'interfaces fibres/espace libre.

Le collimateur ainsi réalisé n'impose aucune contrainte sur la longueur du tronçon de fibre à maintien d'expansion S2 si bien que l'on dispose de toute liberté sur le choix de cette longueur à condition que seul le mode LPO1 soit excité tout le long du tronçon S2.

Il est en outre possible si nécessaire, que la facette extrême de ce tronçon soit :
polie ou clivée droite ou en biais, arrondie, attaquée chimiquement,
ou qu'elle reçoive un dépôt anti-reflet ou un dépôt d'un motif quelconque (photo inscription par exemple) pour réaliser une lentille de diffraction.

L'extrémité de cette section S2 peut également être étirée, amincie, si besoin et cela sans destruction ou modification de la fonction assurée par cette section.

En outre le collimateur C permet un raccordement avec toute optique y compris avec une autre fibre soudée à son extrémité.

Un faisceau lumineux injecté dans la fibre F est collimaté dans la section S1 puis guidé par la section S2. Le mode de propagation dans cette section correspond au mode LP01. En pratique, la propagation du mode LP01 « large » est possible sur une certaine distance. La propagation de ce mode ne s'accompagne d'aucune variation de la géométrie du faisceau optique (diamètre de mode). L'excitation de ce mode, et uniquement de ce mode, est conditionnée par la qualité de l'injection du faisceau provenant de la section S1 vers la section S2.

La fabrication d'une fibre monomode comprenant un collimateur à maintien de l'expansion de mode selon l'invention est compatible avec une fabrication collective c'est à dire avec une fabrication simultanée de plusieurs fibres. Une fabrication collective s'applique tout particulièrement à des ensembles de fibres tels que des rubans de fibres.

La figure 7 illustre la fabrication collective de fibres optiques à expansion de mode selon l'invention.

Le procédé de fabrication consiste d'une part à réaliser un ensemble de fibres monomodes à expansion de mode.

Le procédé consiste d'autre part à réaliser collectivement un ensemble de fibres à maintien d'expansion (fibres à saut d'indice ou à large coeur).

Le procédé consiste enfin à souder collectivement bout à bout les extrémités des fibres à expansion de mode et à maintien de mode, puis à cliver collectivement à la longueur désirée les fibres à maintien de mode.

Une fibre à collimateur intégré selon l'invention a été réalisée par le déposant pour différentes longueurs de fibre à saut d'indice en extrémité. Les résultats des différents essais ont montré une indépendance à la longueur de cette fibre d'extrémité pour des longueurs variant de 0 à 10 mm. Dans l'exemple choisi, le diamètre de mode est de 20 µm. Ce diamètre de mode est obtenu par l'utilisation de sections de fibres de différentes natures. L'onde injectée est supposée plane en entrée de la fibre à saut d'indice.
Les caractéristiques de la fibre sont les suivantes:
- fibre monomode : G652,Φ_{EXT} = 125 µm, Φ_{coeur =} 7.2 µm
- lentille d'expansion de mode (section S1) : passage de 11 µm à 20 µm
- fibre à saut d'indice (S2) : Φ_{EXT} = 125 µm, Φ_{coeur} = 35 µm, (saut d'indice)Δn = 21 10⁻³
Pour cette fibre le diamètre du mode LP01 est de 20 µm.

Il s'agit d'un exemple, les caractéristiques des fibres peuvent être différentes. Par exemple avec une fibre standard à saut d'indice 50/125, le diamètre du mode LP01 est d' environ 30 µm.

La figure 6 montre l'indépendance de la longueur de fibre multimode à saut d'indice pour le diamètre de mode du faisceau de sortie.

On remarque que le diamètre de mode du faisceau est inchangé pour une longueur de fibre à saut d'indice de 0 à 10 mm.

En outre, des essais ont été effectués sur le rendement d'interconnexion. Le rendement d'interconnexion est le même que pour une fibre sans un tronçon de fibre multimode à saut d'indice. Cette fibre n'apporte donc aucune modification aux propriétés optiques de l'interconnexion. La tolérance de positionnement est celle de deux faisceaux de 20 µm de diamètre de mode.

Ces pertes incluent les pertes de Fresnel du dioptre silice/air, qui s'élèvent à 0,34 db.

Ainsi, le déposant a réalisé et modélisé un collimateur intégré à la dimension de la fibre dont les propriétés optiques sont indépendantes, dans une certaine mesure, de la longueur de son extrémité.

## Revendications

1. Collimateur optique pour fibres monomodes, comportant un tronçon de fibre à expansion de mode (S1) comprenant une entrée et une sortie pour un faisceau lumineux et agencé pour élargir le diamètre dudit faisceau de lumineux et pour le collimater, et couplé à la sortie du tronçon de fibre à expansion de mode (S1), un tronçon de fibre à maintien d'expansion (S2) adapté pour maintenir constant le diamètre du faisceau lumineux guidé pour ce tronçon, le tronçon à expansion de mode (S1) et le tronçon à maintien d'expansion (S2) étant adaptés pour que le faisceau lumineux provenant du tronçon à expansion de mode (S1) et injecté dans le tronçon à maintien d'expansion (S2) soit apte à exciter uniquement le mode LP01 du tronçon de fibre à maintien d'expansion (S2), et pour que seul le mode LPO1 soit excité tout le long du tronçon à maintien d'expansion (S2) **caractérisé en ce que** les tronçons de fibre (S1,S2) ont le même diamètre extérieur et **en ce que** le tronçon de fibre à expansion de mode (S1) est constitué par une pluralité de tronçons de fibre différents, juxtaposée par soudure.

2. Collimateur optique selon la revendication 1, **caractérisé en ce que** le tronçon de fibre à maintien d'expansion (S2) est constitué par une fibre multimode à saut d'indice.

3. Collimateur optique selon la revendication 1, **caractérisé en ce que** le tronçon de fibre à maintien d'expansion (S2) est constitué par une fibre monomode de diamètre de coeur supérieur à celui de la fibre monomode pour lequel il est prévu.

4. Collimateur selon la revendication 2, dans lequel la longueur du tronçon à maintien d'expansion est inférieure ou égale à 10 millimètres.

5. Collimateur selon l'une des revendications 1 à 4, dans lequel le tronçon à expansion de mode et le tronçon à maintien d'expansion sont soudés l'un à l'autre.

6. Fibre optique monomode à collimateur intégré, **caractérisée en ce qu'**elle comporte, à une extrémité, un collimateur optique selon l'une quelconque des revendications précédentes.

7. Fibre optique monomode selon la revendication 6, dans laquelle le diamètre extérieur du collimateur est identique à celui de la fibre dans laquelle il est intégré.

## Patentansprüche

1. Optischer Kollimator für Monomodeleiter aufweisend
einen Leiterabschnitt zur Expansion der Mode (S1) umfassend einen Eingang und
einen Ausgang für ein Lichtbündel, und angeordnet, um den Durchmesser des genannten Lichtbündels zu vergrößern und um ihn zu kollimieren und, mit dem Leiterabschnitt zur Expansion der Mode (S1) verbunden,
einen Leiterabschnitt zur Aufrechterhaltung der Expansion (S2), geeignet, um den Durchmesser des Lichtbündels, das durch diesen Abschnitt geleitet wird, konstant zu halten,
wobei der Leiterabschnitt zur Expansion der Mode (S1) und der Leiterabschnitt zur Aufrechterhaltung der Expansion (S2) dazu geeignet sind, dass
das aus dem Leiterabschnitt zur Expansion der Mode (S1) herkommende und in den Leiterabschnitt zur Aufrechterhaltung der Expansion (S2) eingeleitete Lichtbündel in der Lage ist, nur die Mode LP01 des Leiterabschnitts zur Aufrechterhaltung der Expansion (S2) anzuregen, und dass
allein die Mode LP01 über die gesamte Länge des Leiterabschnitts zur Aufrechterhaltung der Expansion (S2) angeregt ist, **dadurch** charakterisiert, dass die Leiterabschnitte (S1, S2) den gleichen Außendurchmesser haben und dass der Leiterabschnitt zur Expansion der Mode (S1) durch eine Vielzahl von unterschiedlichen Leiterabschnitten gebildet ist, die nebeneinanderliegend verschweißt sind.

2. Optischer Kollimator gemäß Anspruch 1, **dadurch gekennzeichnet, dass** der Leiterabschnitt zur Aufrechterhaltung der Expansion (S2) durch einen Multimodeleiter mit Stufenindex gebildet wird.

3. Optischer Kollimator gemäß Anspruch 1, **dadurch gekennzeichnet, dass** der Leiterabschnitt zur Aufrechterhaltung der Expansion (S2) durch einen Monomodeleiter mit einem Kerndurchmesser größer als der des Monomodeleiters, für den er vorgesehen ist, gebildet wird.

4. Kollimator gemäß Anspruch 2, in dem die Länge des Leiterabschnitts zur Aufrechterhaltung der Expansion kleiner oder gleich 10 mm ist.

5. Kollimator gemäß einem der Ansprüche 1 bis 4, in dem der Leiterabschnitt zur Expansion der Mode und der Leiterabschnitt zur Aufrechterhaltung der Expansion miteinander verschweißt sind.

6. Monomode-Lichtwellenleiter mit integriertem Kollimator, **dadurch gekennzeichnet, dass** er an einem Ende einen Kollimator gemäß irgend einem der vorhergehenden Ansprüche aufweist.

7. Monomode-Lichtwellenleiter gemäß Anspruch 6, in dem der Außendurchmesser des Kollimators identisch mit dem des Leiters ist, in den er integriert ist.

## Claims

1. An optical collimator for single mode fibers, comprising a fibre segment with mode expansion (S1) comprising an entry and an exit for a light beam, and arranged so as to widen the diameter of said light beam and to collimate said light beam, and, coupled to the exit of the fibre segment with mode expansion (S1), a fibre segment with expansion holding (S2) for keeping constant the diameter of the guided light beam for that segment, the segment with mode expansion (S1) and the segment with expansion holding (S2) being adapted such that the light beam coming from the segment with mode expansion (S1) and injected into the segment with expansion holding (S2) is capable of exciting only the LP01 mode of the fibre segment with expansion holding (S2), and such that only the LP01 mode is excited over the entire length of the segment with expansion holding (S2), **characterised in that** the fibre segments (S1, S2) have the same outside diameter, and **in that** the fibre segment with mode expansion (S1) consists of a plurality of different fibre segments, juxtaposed by welding.

2. An optical collimator according to Claim 1, **characterised in that** the fibre segment with expansion holding (S2) consists of a multimode fibre with step index.

3. An optical collimator according to Claim 1, **characterised in that** the fibre segment with expansion holding (S2) consists of single mode fibre with a core diameter greater than that of the single mode fibre for which it is designed.

4. A collimator according to Claim 2, wherein the length of the segment with expansion holding is less than or equal to 10 millimetres.

5. A collimator according to one of Claims 1 to 4, wherein the segment with mode expansion and the segment with expansion holding are welded to one another.

6. A single mode optical fibre with integrated collimator **characterised in that** it comprises, at one end, an optical collimator according to one of the preceding claims.

7. A single mode optical fibre according to Claim 6, wherein the external diameter of the collimator is identical to that of the fibre in which it is integrated.
